# EUROPEAN PATENT SPECIFICATION

(11) **EP 0 580 265 B1**
(45) Date of publication and mention of the grant of the patent: **16.06.1999**
(21) Application number: 93202194.2
(22) Date of filing: 23.07.1993
(51) Int. Cl.: A61H 33/02, A47K 3/02, A61H 33/00, F16K 1/10

(54) **Whirlpool bath system**
Whirlpoolwannensystem
Systèm de bains à remous

(30) Priority: 23.07.1992 NL 9201326
(43) Date of publication of application: 26.01.1994
(73) Proprietor: P.J. VAN OUWERKERK HOLDING B.V., 1506 MG Zaandam (NL)
(72) Inventor: Van Ouwerkerk, Pieter Johannes, (NL)
(74) Representative: de Bruijn, Leendert C.

(56) References cited:
- EP-A- 0 268 050
- WO-A-92/03082
- DE-A- 3 928 464
- DE-C- 584 027
- FR-A- 2 608 908

## Description

The present invention relates to a bath according to the preamble of claim 1.

Such a bath is known from the European application 0 268 050. A circulation system is described in which a pump is incorporated. The downstream end of the feed line for the nozzles is connected to the inlet of the pump. Compensation for water sprayed to the nozzle is provided for by the supply of fresh water connected to the inlet of the pump. The most downstream end of the feed line is at its connection with the inlet line for the pump connected to a branch which also feeds in the closable outlet (drain) for the bath. Overflow pipes are present which also function for back flowing during cleaning purposes.

This system requires a constant feed of fresh water to compensate for the water jetted into the bath. Because of the loop system of feed line and inlet to the pump it is not possible to withdraw water from the bath.

FR-A-2,608,908 describes a system for introducing air into the bottom of a bath tub. The air line to the nozzles is provided with a one way valve as well as a valve which provides in connection between the feed line of the nozzles and the outlet (drain) of the bath tub.

WO 92/03082 describes a pump and nozzle system for water in which water is originating from the bath and pumped to the nozzles. There is no provision for removal of water in the feed line to the nozzles after use which might result in occurrence of bacteria.

WO 86/01100 describes a nozzle system for injecting water in a bath tub wherein the water is pumped into a feed rail from a pump which is fed by an inlet line which is provided inside said feed rail and connected to the outlet (drain) of the bath tub. There is no provision for removing water at the lowest level of the feed line.

DE-A1-3 928 464 shows a water pump having a feed line connected to nozzles as well as a separate system for introducing air.

The object of the invention is to avoid this disadvantage and to provide more hygienic conditions. This is realised with a bath according to the preamble of claim 1 having the characterising features thereof.

The presence of the further shut-off in the feed pipe of the pump means that the latter can be used not only for clearing the water from the pipe system after use, but also for producing a pulsating fluid flow emerging from the outflow nozzles during use. For, opening the valve will cause the pressure in the delivery system to fall off completely, and no more fluid will emerge from the outflow nozzles. A pulsating fluid jet from the outflow nozzles can be obtained particularly cheaply in this way. In the prior art it has been proposed hitherto to operate the pump in a special way, which involves complicated and expensive electronics.

Although the further shut-off valve may be of any design known in the prior art, it is preferably in the form of a mushroom valve which can act upon a valve seat, at least a part of the valve seat being formed by the bottom side of the inside pipe wall of said pipe after fitting. Due to the fact that the pipe wall forms part of the valve seat, it is not necessary to provide a raised part, and moisture is prevented from remaining lying at this point when the bath is emptying. Further hygienic problems can be avoided as a result.

According to a preferred embodiment of the invention, the outlet comprises a central element provided with a vertical inlet for water coming out of the bath, which inlet is provided with a seat for interacting with a shut-off plug, and with an outlet lying below that for connection to a pipe, at least two branch pieces being connected to the central element.

In this way, the outlet in a bath, which is necessary in any case, can be combined with the various pipes necessary for the system according to the invention. In order to make such an outlet as universally usable as possible, the connection between the branch pieces and the outlet is provided with sealing break walls.

Apart from the abovementioned possibility of providing the shut-off valve in the form of a valve fitted in the pipe system, it is also possible to provide said shut-off valve in a form comprising a plug which acts upon a seat provided with at least one opening which is in communication with at least one of the branch pieces. In this way, the shut-off plug normally present in a bath can be used for the discharge of water residues through providing openings in the seat. For, during use such a plug will automatically shut off said openings, and after use the removal of the plug will automatically produce a connection between the outlet of the bath and the discharge pipe system. This means that whether or not the various pipes of the bath are closed can be controlled in a particularly simple way by the user without the latter being aware of it, and without further special measures having to be taken.

The invention will be explained in greater detail below with reference to the examples of embodiments shown in the drawing, in which:
Fig. 1 shows a first embodiment of an outflow nozzle in cross-section;
Fig. 2 shows a second embodiment of an outflow nozzle;
Fig. 3 shows diagrammatically, partially cut away, a first application of the outflow nozzles;
Fig. 4 shows diagrammatically, partially cut away, a second application of the outflow nozzles according to the invention;
Fig. 5 shows diagrammatically, partially cut away, a third application of the outflow nozzles according to the invention;
Fig. 6 shows in detail, in cross-section, the non-return valve shown in Figures 3 - 5; and
Fig. 7 shows the outlet shown in the various embodiments according to Figures 3 - 5, partially in cross-section and partially cut away.

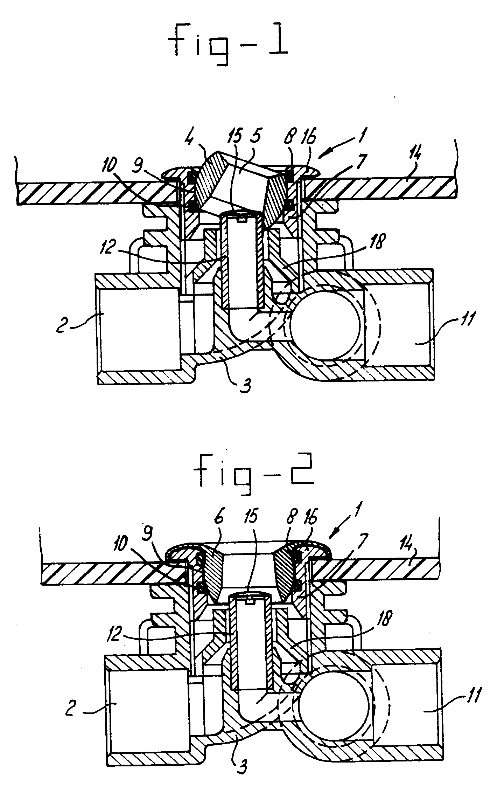

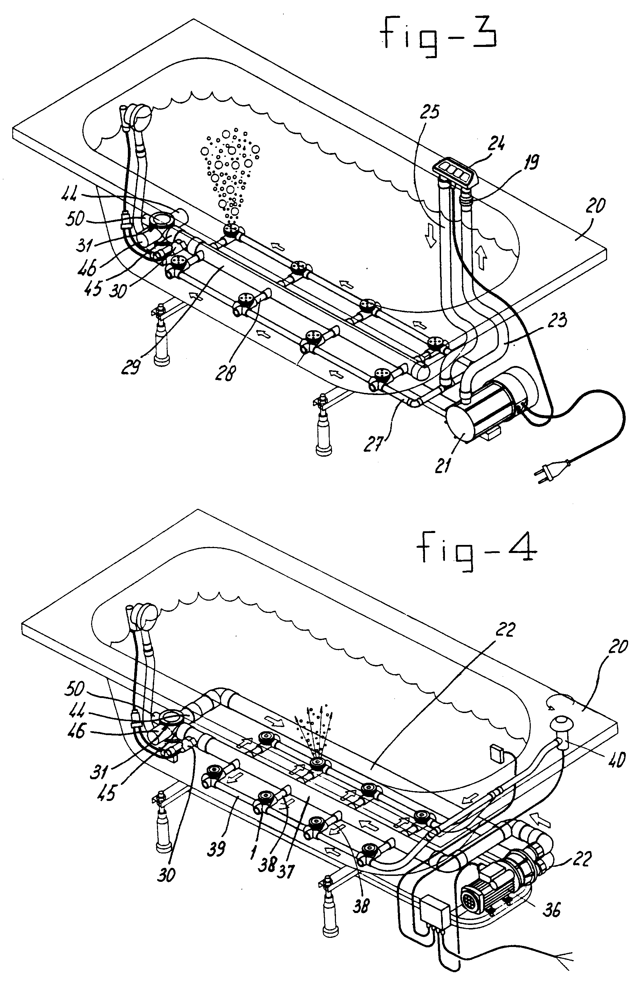

The outflow nozzle which is not part of the invention is indicated in its entirety by 1. It can be fixed in the wall 14 of, for example, a bath 20 (see Figs. 3 - 5). Fixing to wall 14 can be carried out in any way known in the prior art. Outflow nozzle 1 is provided with a first inlet conduit 2, in the present embodiment intended in particular for water which is accommodated in housing 3. A second inlet conduit 11, which in this embodiment is intended for the supply of air, is also present. The first inlet conduit opens into the housing, and said housing contains an receiving element 16, which is provided with two recesses in which a top O-ring 8 and a bottom O-ring 10 are present. An outflow head 4 is snapped into the space bounded between these two receiving members. Due to the fact that the groove for the O-ring is slightly larger than the O-ring 8, the elastic material of the O-ring makes it possible to move outflow head 4 along it. Fig. 1 illustrates how outflow head 4 is rotatable relative to accommodation element 16. Outflow head 4 is provided with an outlet conduit 5. Jet pipe 12, which is connected to inlet conduit 11, opens out into said outlet conduit. A valve 15 is fitted at the end of jet pipe 12. Reference number 18 indicates a venturi fitting, which serves to increase the water velocity and thus to improve the suction capacity for air.

The device described above functions as follows:

When water or any other fluid is supplied under pressure through inlet conduit 2, a partial vacuum will occur at the position of the mouth of conduit 12, thus causing valve 15 to open and a second fluid, such as air, to be moved through the inlet conduit 11.

Fig. 2 show a further embodiment of the outflow nozzle according to the state of the art. In this case an outflow head 6, which is mushroom-shaped, is fitted in the receiving element 16. The spherical surface 9 of outflow head 6 means that in this case also it is snapped in between the O-rings 8 and 10. In the case of this device it is not possible - or is possible only to a limited extent - to set the position of the outflow head relative to the outflow nozzle through tilting. However, with such a device it is possible to achieve various forms of outflow of the fluid from the outlet conduit.

Although the outflow nozzle is described above as being used for the supply of two fluids, it is, of course, possible to supply more than two fluids, or only one fluid. A built-in example of the outflow nozzles according to the invention will be described with reference to Figures 3 - 5. In Fig. 3, which is not within the scope of the appended claims, a bath is indicated by 20. It is provided with an air pump 21 which is connected to pipe 25 by means of pipe 23 and control unit 24, which also acts as a safety device. Pipe 25 opens out into distribution pipe 27, to which the nozzles 1 are connected. The nozzles 1 are also provided with an outlet 28, which is connected to a central pipe 29. The central pipe 29 is connected to outlet 31, in which a valve 30 is disposed. This device functions as follows:

During normal operation valve 30 will be closed. When the pump 21 is operated by means of control unit 24, air will pass through the pipes 23, 25 and 27 into the nozzles 1. During operation, and in particular before and after operation, this air system will fill up or will be full of water downstream of the pipe 25. The level here can rise to the level in the bath. The presence of non-return valve 19 in pipe 23 for control unit 24 means that it is in principle not possible for water to flow back. If water remains lying in the pipes while this system is not in use, this can lead to undesirable deposits and/or formation of undesirable bacteria and/or a bad smell. In order to prevent this, it is proposed according to the invention that the valve 30 should be provided. This valve works in such a way that when the system is switched off this valve is opened, with the result that any water present can flow away through the central pipe 29. Due to the fact that the valve 30 shuts off near the bottom without a threshold in the pipe, complete emptying is ensured.

Fig. 4 shows a further embodiment of the invention, in which the outflow nozzle 1 according to the invention is used for two fluids, viz. air and water. For this purpose, bath 20 is provided with a water pump 36. The latter is provided with a suction pipe 22, which is connected to the branch piece of outlet 31, which in Fig. 4 is still shut off. Valve 30 is fitted in pipe 37, which pipe 37 is the delivery side of the pump. From pipe 37 branches 38 go to the outflow nozzles. The water jet effect shown with reference to Figures 1 and 2 will cause a partial vacuum to occur on pipe 39, which opens into the air part of the outflow nozzles 1, i.e. on the further inlet conduit 11. Opening shut-off 40 means that more or less air can be admitted, with the result that a mixture of air and water emerges from the outflow nozzle. In the case of this construction also, the valve 30 serves to empty the system after use. In other words, valve 30 is opened after use. With this valve it is also possible to obtain a pulsating action of the flow emerging from the outflow nozzles. For, if valve 30 is opened during the operation of pump 36, the pressure will fall off and no fluid will emerge from the outflow nozzles, because the flow resistance through the system formed by the pipes 37, outlet 31 and suction pipe 22 is much lower than the flow resistance through the outflow nozzles 1. If the valve is opened and closed pulsatingly, a pulsating flow will occur near the outflow nozzles 1.

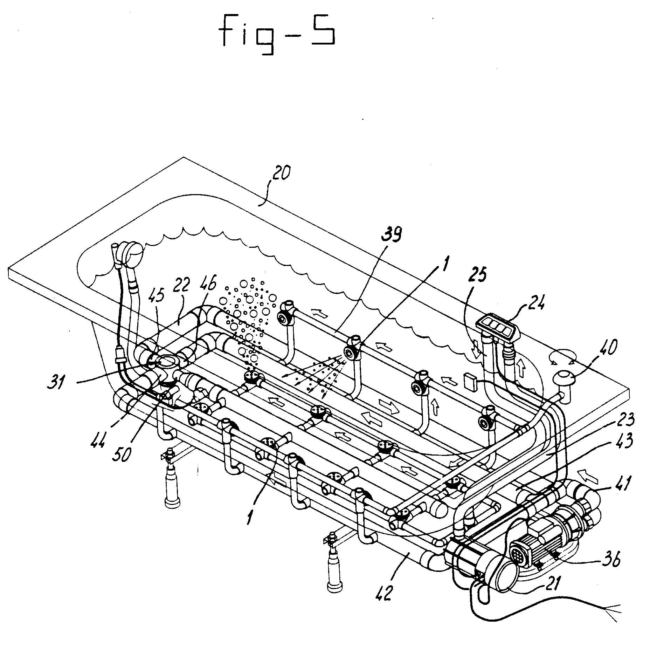

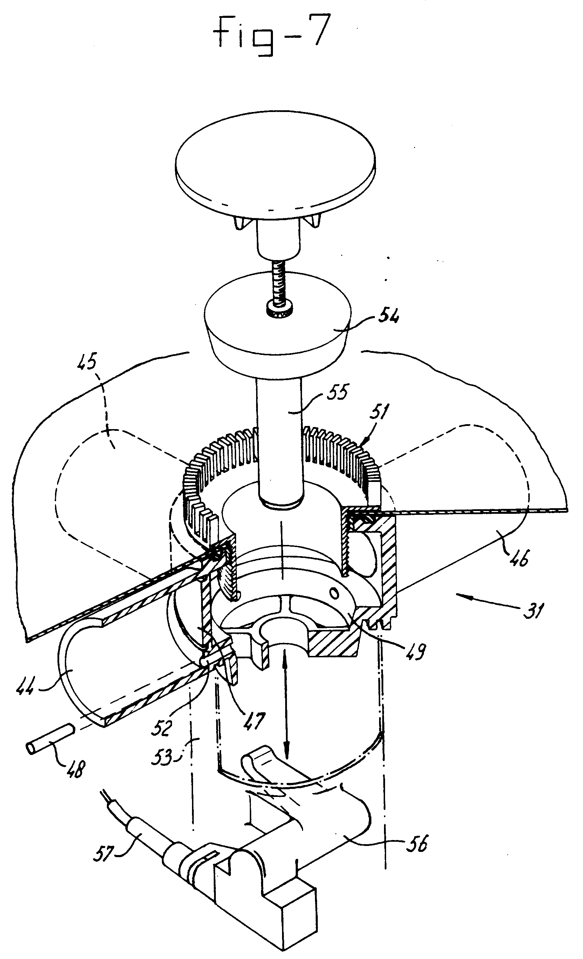

Fig. 5 illustrates an embodiment of the invention, in which both a water pump 36 and an air pump 21 are present. The water required for the water pump 36, as in the case of the embodiments described above, comes from the outlet 31 described below, which is in communication with the water pump via a pipe 22. Feed pipe 41 of water pump 36 branches off into pipes 42 and 43, which in turn are connected to outflow nozzles 1 situated in the wall. These nozzles are provided with air, in the manner described with reference to Fig. 4, through the water jet effect through the pipes 39 and regulating shut-off 40. Pipes 42 and 43 are connected at their ends to outlet 31 by means of the small openings 52, which will be discussed with reference to Fig. 7. This means, on the one hand, that hardly any pressure loss occurs for pump 36 and, on the other, that complete emptying of not only the outflow nozzles 1 and pipes 42 and 43 but also other parts is ensured.

Air pump 21 is connected to a pipe 23, which is connected by means of control unit 24 to the pipe 25, which pipes open into nozzles 1 situated in the bottom of the bath. This corresponds to the design shown in Fig. 3. A combination with the effects obtained with the embodiment shown in Figs. 3 and 4 is provided in this way.

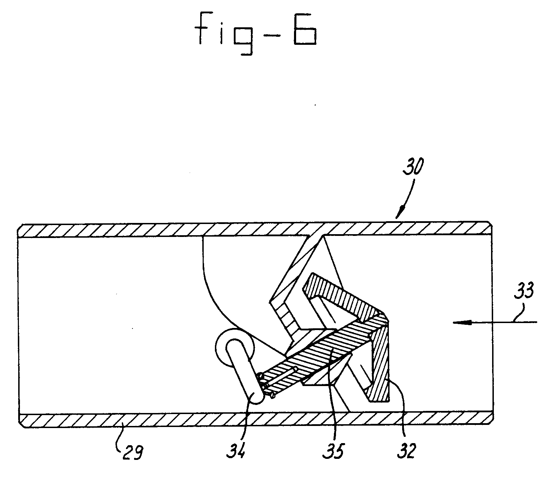

The valve used above is illustrated in greater detail in Fig. 6. Valve 30 comprises a valve disc 32 which opens against the flow indicated by 33 and is connected to a valve stem 35, which is in turn operated by a lever 34. Lever 34 is operated by means of an electric coil in a manner not shown. Manual operation, for example connected to the operation of the plug 54, yet to be described, is also possible.

Due to the fact that the bottom part of the valve disc 32 acts upon the bottom part of pipe 29, which bottom part of the pipe 29 forms the valve seat, no flange is needed in this pipe 29. This means that no water can remain lying behind such a flange, so that pipe 29 can empty completely. This prevents water from remaining behind and bacterial growth and the like from occurring. In the embodiment shown in Fig. 3, the valve is closed in the normal operating position. It will be opened only if the bath has to be emptied and all remaining moisture has to be removed from the nozzles. In the embodiment shown in Fig. 4, valve 30 can also be operated during normal use in order to regulate the water pressure. For, opening valve 30 to a greater or lesser extent will increase or reduce the pressure in the nozzles 1.

In Fig. 7 outlet 31 is cut away and illustrated in greater detail in cross-section. It comprises four branch pieces 44, 45, 46 and 50. Branch piece 50 is not illustrated, and can be seen only in Figures 3 - 5. All these branch pieces are provided with break walls 47. Outlet 31 is supplied with break walls already present in which only openings 52 are provided, in which branch pieces 48 may or may not be provided. If such branch pieces 48 are fitted, the branch piece concerned is completely shut off relative to the outlet. Openings 52 open into a seat ring 49, which can be shut off by plug 54. In other words, if plug 54, which is the central outlet plug for the water in the bath, is placed in the shut-off position, the openings 52 will be blocked. It is, however, also possible to remove break walls 47, as shown by means of branch piece 46. The fourth branch piece 50, shown in Figures 3 - 5, is also provided with such a break wall which has a shut-off opening 52. Outlet 31 is provided with a screw-in fixing nut 51 for the accommodation of the bottom of the bath between outlet 31 and nut 51. In addition, a pipe 53 leading to the sewer is connected to outlet 31. Plug 54 is provided with an extension 55. A control mechanism 56 can act thereon in a manner which is known in the prior art. In other words, plug 54 is moved up and down by means of cable 57. Said cable 57 can be connected to a control device situated on the edge of the bath. Said cable 57 can also be connected to the earlier-described valve 30. This means that the valve is automatically opened through operation of the plug 54 for emptying the bath.

It can be seen from Figures 4 and 5 how outlet 31 according to the present invention can be connected in various ways to the different pipes then present. It is possible to achieve different designs with one outlet 31, in the case of which opening 52 is open or closed and break wall 47 is or is not present, depending on the use. For example, in the case of the embodiment shown in Fig. 3, the branch pieces 44, 46, 50 are fully shut off, while at least opening 52 of branch piece 45 is open.

In the case of the embodiment shown in Fig. 4 the same applies, although the break wall 47 is removed from the branch piece 44. The water pressure can be regulated by means of valve 30 in this way.

In the case of the embodiment shown in Fig. 5 all branch pieces are connected. Break wall 47 of branch piece 46 is intact, but opening 52 is open and branch pieces 44 and 45 removed. Through the presence of the plug 54, not shown in that figure, this has an effect only during the emptying of the bath, and no pressure loss occurs. Break wall 47 of branch piece 45 is removed because the latter forms the suction pipe for water pump 36. Only opening 52 of branch piece 50 must be present, while the break wall 47 concerned can remain in position. It emerges from the above that countless variations are possible with the outlet according to the invention, alone or combined with the pipe systems shown here.

## Claims

1. Bath comprising a number of outflowing nozzles provided below the highest possible water level in the bath along the wall and/or the bottom, for the delivery of at least water and possibly air, which nozzles are provided with a supply system for water and possibly air comprising at least a water pump (36) having an inlet connected to a suction pipe (22) being connected to the outlet of the bath and having an outlet connected to a feed line between said pump and the nozzles, each nozzle being connected to a discharge pipe system comprising said feed line connected to the outlet of said bath and being provided with a shut-off valve (31), characterized in that the suction pipe (22) is connected in permanent open connection with said bath, and in that a further shut-off valve (30) is provided in said feed line between the furthest downstream nozzle and said shut off valve.

2. Bath according to claim 1, having a supply system for air, wherein each of said nozzles has a separate inlet (11) for air.

3. Bath according to one of the preceding claims, in which the shut-off valve (30) is accommodated in a pipe (29) and comprises a valve disc which can act upon a valve seat, at least a part of the valve seat being formed by the bottom inside pipe wall of said pipe after fitting.

4. Bath according to Claim 3, in which said valve disc is provided with a bevel for conical engagement of the valve seat, while the bottom part of the valve disc after fitting extends parallel to the internal bottom part of the pipe wall when it is in the closed position.

5. Bath according to one of the preceding claims, in which the outlet (31) comprises a central element provided with a vertical inlet for water coming out of the bath, provided with a seat (49) for interaction with a shut-off plug (54), and provided with an outlet lying below that for connection to a pipe (53), at least two branch pieces (44-46) being connected to the central element.

6. Bath according to Claim 5, in which a break wall (47) is present in the connection between the branch pieces and the outlet.

7. Bath according to Claim 5 or 6, in which the shut-off comprises a plug (54) which acts upon a seat (49) which is provided with at least one opening (52), which is in communication with at least one of the branch pieces.

## Patentansprüche

1. Badewanne mit mehreren Austrittsdüsen, die zur Zuführung von zumindest Wasser und möglicherweise Luft unter dem höchstmöglichen Wasserspiegel in der Badewanne entlang der Wand und/oder dem Boden vorgesehen sind, wobei die Düsen mit einem Versorgungssystem für Wasser und möglicherweise Luft versehen sind, das mindestens eine Wasserpumpe (36) umfaßt, die einen mit einem Saugrohr (22) verbundenen Einlaß aufweist, wobei das Saugrohr mit dem Auslaß der Badewanne verbunden ist und einen Auslaß aufweist, der mit einer Zufuhrleitung zwischen der Pumpe und den Düsen verbunden ist, wobei jede Düse mit einem Ablaßrohrsystem verbunden ist, das die mit dem Auslaß der Badewanne verbundene Zufuhrleitung umfaßt, welche mit einem Absperrventil (31) versehen ist, dadurch gekennzeichnet, daß das Saugrohr (22) in dauerhaft geöffnetem Zustand mit der Badewanne verbunden ist und daß ein weiteres Absperrventil (30) in der Zufuhrleitung zwischen der am weitesten stromabwärts liegenden Düse und dem Absperrventil vorgesehen ist.

2. Badewanne nach Anspruch 1, die ein Luftversorgungssystem aufweist, wobei jede der Düsen einen getrennten Einlaß (11) für Luft aufweist.

3. Badewanne nach einem der vorhergehenden Ansprüche, bei der das Absperrventil (30) in einem Rohr (29) untergebracht ist und einen Ventilteller umfaßt, der auf einen Ventilsitz einwirken kann, wobei mindestens ein Teil des Ventilsitzes nach dem Anbringen durch die untere Rohrinnenwand des Rohrs gebildet wird.

4. Bad nach Anspruch 3, bei dem der Ventilteller mit einer Abschrägung zum konischen Eingriff mit dem Ventilsitz versehen ist, während sich der Unterteil des Ventiltellers nach dem Anbringen parallel zu dem unteren Innenteil der Rohrwand erstreckt, wenn er sich in geschlossener Position befindet.

5. Badewanne nach einem der vorhergehenden Ansprüche, bei der der Auslaß (31) ein mittleres Element umfaßt, das mit einem vertikalen Einlaß für aus der Badewanne strömendes Wasser, mit einem Sitz (49) zum Zusammenwirken mit einem Absperrstöpsel (54) und mit einem Auslaß, der unter dem zur Verbindung mit einem Rohr (53) liegt, versehen ist, wobei mindestens zwei Zweigstücke (44 - 46) mit dem mittleren Element verbunden sind.

6. Badewanne nach Anspruch 5, bei der eine Unterbrechungswand (47) in der Verbindung zwischen den Zweigstücken und dem Auslaß vorhanden ist.

7. Badewanne nach Anspruch 5 oder 6, bei der das Absperrglied einen Stöpsel (54) umfaßt, der auf einen Sitz (49) einwirkt, der mit mindestens einer mit mindestens einem der Zweigstücke in Verbindung stehenden Öffnung (52) versehen ist.

## Revendications

1. Bain comprenant plusieurs éjecteurs de décharge prévus en dessous du niveau d'eau le plus élevé possible dans le bain le long de la paroi et/ou du fond pour distribuer au moins de l'eau et éventuellement de l'air, lesdits éjecteurs étant munis d'un système d'alimentation pour l'eau, le cas échéant pour l'air, comprenant au moins une pompe à eau (36) dont l'entrée est reliée à une conduite d'aspiration (22) reliée à la sortie du bain et dont la sortie est reliée à un conduit d'alimentation entre ladite pompe et les éjecteurs, chaque éjecteur étant relié à un système de conduite d'évacuation comprenant ledit conduit d'alimentation relié à la sortie dudit bain et étant muni d'une vanne d'arrêt (31), caractérisé en ce que la conduite d'aspiration (22) est reliée audit bain sous la forme d'une connexion ouverte en permanence et en ce qu'on prévoit une vanne d'arrêt supplémentaire (30) dans ledit conduit d'alimentation entre l'éjecteur disposé le plus loin en aval et ladite vanne d'arrêt.

2. Bain selon la revendication 1, possédant un système d'alimentation pour l'air, dans lequel chacun desdits éjecteurs possède une entrée séparée (11) pour l'air.

3. Bain selon l'une quelconque des revendications précédentes, dans lequel la vanne d'arrêt (30) est montée dans une conduite (29) et comprend un disque de vanne qui peut agir sur un siège de vanne, au moins une partie du siège de vanne étant formée par la paroi interne inférieure de ladite conduite après le montage.

4. Bain selon la revendication 3, dans lequel ledit disque de vanne est muni d'un chanfrein pour une mise en contact de forme conique avec le siège de vanne, tandis que la partie inférieure du disque de vanne après le montage s'étend parallèlement à la partie inférieure interne de la paroi de la conduite lorsqu'elle se trouve dans la position fermée.

5. Bain selon l'une quelconque des revendications précédentes, dans lequel la sortie (31) comprend un élément central muni d'une entrée verticale pour l'eau s'évacuant du bain, muni d'un siège (49) destiné à agir réciproquement avec un bouchon d'arrêt (54) et muni d'une sortie disposée en dessous de celle destinée au raccordement à une conduite (53), au moins deux pièces d'embranchement (44-46) étant reliées à l'élément central.

6. Bain selon la revendication 5, dans lequel une paroi d'interruption (47) est présente dans le raccord entre les pièces d'embranchement et la sortie.

7. Bain selon la revendication 5 ou 6, dans lequel l'arrêt comprend un bouchon (54) qui agit sur un siège (49) qui est muni d'au moins une ouverture (52) se trouvant en communication avec au moins une des pièces d'embranchement.
